# EUROPEAN PATENT SPECIFICATION

(11) **EP 3 166 292 B1**
(45) Date of publication and mention of the grant of the patent: **03.07.2019**
(21) Application number: 16204013.3
(22) Date of filing: 06.05.2011
(51) Int. Cl.: H04M 1/73, G06F 1/32, H04W 52/02, H04M 1/725, H04W 8/22

(54) **PARTIAL ENABLING OF FUNCTIONS IN A MOBILE TERMINAL**
TEILWEISES AKTIVIEREN VON FUNKTIONEN EINES MOBILEN ENDGERÄTES
ACTIVATION PARTIELLE DES FONCTIONS D'UN TERMINAL MOBILE

(30) Priority: 08.06.2010 US 796474
(43) Date of publication of application: 10.05.2017
(62) Divisional of application: 11165025.5
(73) Proprietor: Nokia Technologies Oy, 02610 Espoo (FI)
(72) Inventor: Stoustrup, Asger, 2300 Copenhagen S (DK); Mortensen, Thomas, 2860 Soborg (DK)
(74) Representative: Anderson, Oliver Ben

(56) References cited:
- US-A1- 2005 116 840
- US-A1- 2008 037 744
- US-A1- 2008 055 276
- US-A1- 2009 091 544

## Description

### FIELD OF INVENTION

Example embodiments of the present invention relate generally to the use of input sensors in mobile devices, and in particular, to sequences of events to use the input sensors sparingly while enhancing the functionality of the mobile device through their use.

### BACKGROUND

The modern communications era has brought about a tremendous expansion of wireline and wireless networks. Computer networks, television networks, and telephone networks are experiencing an unprecedented technological expansion, fueled by consumer demand. Wireless and mobile networking technologies have addressed consumer demands while providing more flexibility and immediacy of information transfer.

Mobile devices, such as cellular telephones, have become smaller and lighter while also becoming more capable of performing tasks that far exceed a traditional voice call. Mobile devices are increasingly becoming small, portable computing devices that are capable of running a variety of applications and providing a user with a display on which they may watch video, view web pages, play interactive games, or read text. Devices are often small enough to fit into a pocket to achieve desired portability of these devices; however, as the capabilities of the devices increase the power consumption generally increases too. While sensors, displays, and accessories are evolving in terms of increased efficiency, the addition of more sensors (e.g. motion sensors), more/bigger displays, and more accessories (e.g., cameras) continues to increase the power demands. It may be desirable to decrease the power consumption of the mobile devices while increasing or enhancing the functionality.

US2008055276 describes a control method for providing a partial lock function in a portable device having a touch input unit and a lock key.

### SUMMARY

The invention is defined by the claims.

### BRIEF DESCRIPTION OF THE DRAWING(S)

Having thus described the invention in general terms, reference will now be made to the accompanying drawings, which are not necessarily drawn to scale, and wherein:
FIG. 1 illustrates an communication system in accordance with an example embodiment of the present invention;
FIG. 2 is a schematic block diagram of a mobile device according to an example embodiment of the present invention; and
FIG. 3 is a flow chart of a method of operating a mobile terminal with three levels of functionality according to an example embodiment of the present invention.

### DETAILED DESCRIPTION

Various systems, devices and methods will now be described hereinafter with reference to the accompanying drawings. Like reference numerals refer to like elements throughout. As used herein, the terms "data," "content," "information" and similar terms may be used interchangeably to refer to data capable of being transmitted, received and/or stored.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

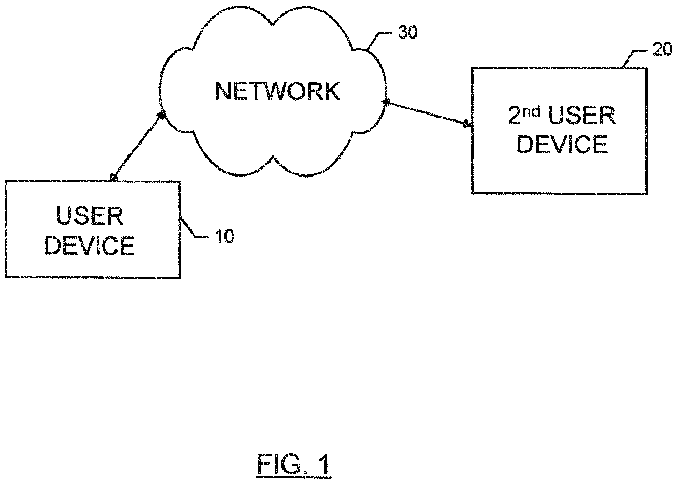

A session may be supported by a network 30 as shown in FIG. 1 that may include a collection of various different nodes, devices or functions that may be in communication with each other via corresponding wired and/or wireless interfaces or in ad-hoc networks such as those functioning over Bluetooth®. As such, FIG. 1 should be understood to be an example of a broad view of certain elements of a system that may incorporate example embodiments of the present invention and not an all inclusive or detailed view of the system or the network 30. Although not necessary, in some example embodiments, the network 30 may be capable of supporting communication in accordance with any one or more of a number of first-generation (1G), second-generation (2.G), 2.5G, third-generation (3G), 3.5G, 3.9G, fourth-generation (4G) mobile communication protocols and/or the like.

One or more communication terminals such as the mobile terminal 10 and the second mobile terminal 20 may be in communication with each other via the network 30 and each may include an antenna or antennas for transmitting signals to and for receiving signals from a base site, which could be, for example a base station that is part of one or more cellular or mobile networks or an access point that may be coupled to a data network, such as a local area network (LAN), a metropolitan area network (MAN), and/or a wide area network (WAN), such as the Internet. In turn, other devices (e.g., personal computers, server computers or the like) may be coupled to the mobile terminal 10 and the second mobile terminal 20 via the network 30. By directly or indirectly connecting the mobile terminal 10 and the second mobile terminal 20 and other devices to the network 30, the mobile terminal 10 and the second mobile terminal 20 may be enabled to communicate with the other devices or each other, for example, according to numerous communication protocols including Hypertext Transfer Protocol (HTTP) and/or the like, to thereby carry out various communication or other functions of the mobile terminal 10 and the second mobile terminal 20, respectively.

In some examples, the mobile terminal 10 and the second mobile terminal 20 could be, or be substituted by, any of personal digital assistants (PDAs), wireless telephones, laptop computer, mobile computers, cameras, video recorders, audio/video players, positioning devices, game devices, television devices, radio devices, or various other devices or combinations thereof.

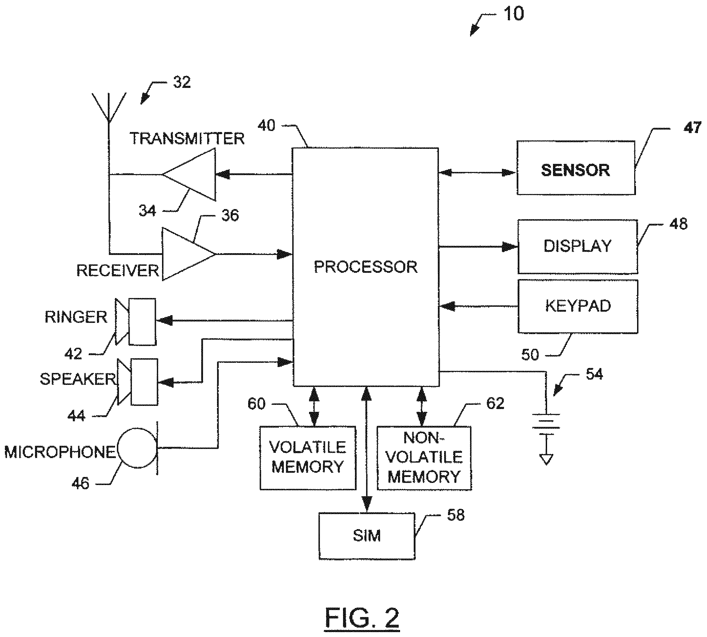

Although the mobile terminal 10 may be configured in various manners, one example of a mobile terminal that could benefit from embodiments of the invention is depicted in the block diagram of Figure 2. While several embodiments of the mobile terminal may be illustrated and hereinafter described for purposes of example, other types of mobile terminals, such as portable digital assistants (PDAs), pagers, mobile televisions, gaming devices, all types of computers (e.g., laptops or mobile computers), cameras, audio/video players, radio, global positioning system (GPS) devices, or any combination of the aforementioned, and other types of communication devices, may employ embodiments of the present invention. As described, the mobile terminal may include various means for performing one or more functions in accordance with embodiments of the present invention, including those more particularly shown and described herein. It should be understood, however, that a mobile terminal may include alternative means for performing one or more like functions, without departing from the spirit and scope of the present invention.

The mobile terminal 10 illustrated in FIG. 2 may include an antenna 32 (or multiple antennas) in operable communication with a transmitter 34 and a receiver 36. The mobile terminal may further include an apparatus, such as a processor 40, that provides signals to and receives signals from the transmitter and receiver, respectively. The signals may include signaling information in accordance with the air interface standard of the applicable cellular system, and/or may also include data corresponding to user speech, received data and/or user generated data. In this regard, the mobile terminal may be capable of operating with one or more air interface standards, communication protocols, modulation types, and access types. By way of illustration, the mobile terminal may be capable of operating in accordance with any of a number of first, second, third and/or fourth-generation communication protocols or the like. For example, the mobile terminal may be capable of operating in accordance with second-generation (2G) wireless communication protocols IS-136, GSM and IS-95, or with third-generation (3G) wireless communication protocols, such as UMTS, CDMA2000, wideband CDMA (WCDMA) and time division-synchronous CDMA (TD-SCDMA), with 3.9G wireless communication protocols such as E-UTRAN (evolved- UMTS (Universal Mobile Telecommunications System) terrestrial radio access network), with fourth-generation (4G) wireless communication protocols or the like.

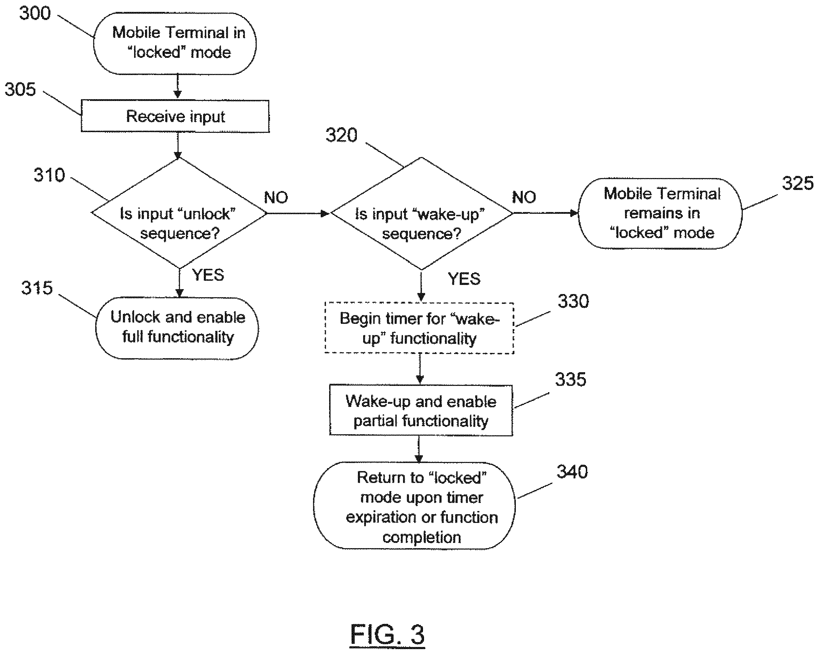

It is understood that the apparatus, such as the processor 40, may include circuitry implementing, among others, audio and logic functions of the mobile terminal 10. The processor may be embodied in a number of different ways. For example, the processor may be embodied as various processing means such as processing circuitry, a coprocessor, a controller or various other processing devices including integrated circuits such as, for example, an ASIC (application specific integrated circuit), an FPGA (field programmable gate array), a hardware accelerator, and/or the like. In an example embodiment, the processor may be configured to execute instructions stored in a memory device or otherwise accessible to the processor. As such, the processor may be configured to perform the processes or cause the processes to be performed, or at least portions thereof, discussed in more detail below with regard to FIG. 3. The processor may also include the functionality to convolutionally encode and interleave message and data prior to modulation and transmission. The processor may additionally include an internal voice coder, and may include an internal data modem.

The mobile terminal 10 may also comprise a user interface including an output device such as an earphone or speaker 44, a ringer 42, a microphone 46, a display 48, and a user input interface, which may be coupled to the processor 40. The mobile terminal 10 may further include sensor(s) 47 for detecting a stimulus such as a button for detecting a depression, a touch sensitive display for detecting a touch, or a motion sensor to detect motion, The user input interface, which allows the mobile terminal to receive data, may include any of a number of devices allowing the mobile terminal to receive data, such as a keypad 50, a touch sensitive display (not shown) or other input device. In embodiments including the keypad, the keypad may include numeric (0-9) and related keys (#, *), and other hard and soft keys used for operating the mobile terminal 10. Alternatively, the keypad may include a conventional QWERTY keypad arrangement. The keypad may also include various soft keys with associated functions. In addition, or alternatively, the mobile terminal may include an interface device such as a joystick or other user input interface. The mobile terminal may further include a battery 54, such as a vibrating battery pack, for powering various circuits that are used to operate the mobile terminal, as well as optionally providing mechanical vibration as a detectable output.

The mobile terminal 10 may further include a user identity module (UIM) 58, which may generically be referred to as a smart card. The UIM may be a memory device having a processor built in. The UIM may include, for example, a subscriber identity module (SIM), a universal integrated circuit card (UICC), a universal subscriber identity module (USIM), a removable user identity module (R-UIM), or any other smart card. The UIM may store information elements related to a mobile subscriber. In addition to the UIM, the mobile terminal may be equipped with memory. For example, the mobile terminal may include volatile memory 60, such as volatile Random Access Memory (RAM) including a cache area for the temporary storage of data. The mobile terminal may also include other non-volatile memory 62, which may be embedded and/or may be removable. The non-volatile memory may additionally or alternatively comprise an electrically erasable programmable read only memory (EEPROM), flash memory or the like. The memories may store any of a number of pieces of information, and data, used by the mobile terminal to implement the functions of the mobile terminal. For example, the memories may include an identifier, such as an international mobile equipment identification (IMEI) code, capable of uniquely identifying the mobile terminal. Furthermore, the memories may store instructions for determining cell id information. Specifically, the memories may store an application program for execution by the processor 40, which determines an identity of the current cell, e.g., cell id identity or cell id information, with which the mobile terminal is in communication.

An example embodiment of a communication network in accordance with one example embodiment is presented by FIG. 1. A flowchart illustrating operations performed by or in relation to the network of an example embodiment is presented in the flowchart of FIG. 3. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of an apparatus employing an embodiment of the present invention and executed by a processor in the apparatus. As will be appreciated, any such computer program instructions may be loaded onto a computer or other programmable apparatus (e.g., hardware) to produce a machine, such that the resulting computer or other programmable apparatus embody means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture the execution of which implements the function specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart block(s).

Accordingly, blocks of the flowchart support combinations of means for performing the specified functions, and combinations of operations for performing the specified functions. It will also be understood that one or more blocks of the flowchart, and combinations of blocks in the flowcharts, can be implemented by special purpose hardware-based computer systems which perform the specified functions, or combinations of special purpose hardware and computer instructions.

In an example embodiment, an apparatus for performing the methods of FIG. 3 above may comprise a processor (e.g., the processor 40) configured to perform some or each of the operations (300-340) described below. The processor may, for example, be configured to perform the operations (300-340) by performing hardware implemented logical functions, executing stored instructions, or executing algorithms for performing each of the operations. Alternatively, the apparatus may comprise means for performing each of the operations described above. In this regard, according to an example embodiment, examples of means for performing operations 300-340 may comprise, for example, the processor 40 and/or a device or circuit for executing instructions or executing an algorithm for processing information as described further below.

In general, example embodiments of the present invention provide for a method for enhancing the user interface of a mobile terminal 10 using sensors 47 while reducing the power consumption of the mobile terminal. Mobile terminals 10 may include sensors 47, such as motion sensors that draw power when they are on or awaiting input. If these sensors are always on, they may constantly draw power, even when they are not in use, thereby unnecessarily consuming power and possibly reducing battery life. Further, if a sensor is always on, there is a higher risk of a false detection wherein an inadvertent motion, touch, or other input may be misconstrued by the mobile terminal as an actual input, and the mobile terminal may react or execute an action that was not requested by a user.

Mobile terminals, particularly those with exposed keys, touch screens, or other forms of unprotected inputs and sensors may employ a key guard feature that requires a user to execute a particular command or series of input steps in order to unlock the key guard and allow the keys, touch screens, sensors, or other inputs to be used. As described herein, when the key guard is ON, the input functions to the mobile terminal are substantially locked in an inactive state where they are inoperable (though not necessarily every input), and when the key guard is OFF, the input functions to the mobile terminal are active and the input sensors are operable. Mobile terminals such as "flip" phones constructed with a clamshell type of closure may protect the keys or other inputs by preventing access to the inputs while the phone is in the closed position. A flip phone may also disable sensors such as motion sensors when the phone is in the closed position and the keypad or touch screen is concealed. Thus, a flip type phone or device may use the closure of the device as the key guard. When in the key guard mode, it may be desirable to enable partial functionality of the mobile terminal while not allowing the total, full functionality available when the key guard feature is off. This limited functionality may include functions that are brief, momentary, or otherwise desirable without fully unlocking the mobile terminal. It is noted that while a key guard feature of a mobile terminal is on and the inputs are substantially locked, the mobile terminal may still receive and send data as necessary for the functionality of applications or services available to the mobile terminal.

Example embodiments of the present invention may allow an input to "wake-up" or enable a particular set of functions while the key guard feature of the mobile terminal is on. Such limited functionality may include enabling some or most of the available inputs or sensors a mobile terminal may have. The functions enabled through the "wake-up" may be a sub-set of functions normally available on a mobile terminal when the key guard is off and optionally, the functions enabled may be a set of functions that is only available when the key guard is on and the "wake-up" feature has been accessed. It is noted that the term "wake-up" is used herein to describe a state of a mobile device involving partial functionality and is differentiated from when a key guard is off and the inputs of the mobile terminal are unlocked such that the mobile terminal permits full functionality. The "wake-up" feature may allow use of any number of inputs available on the mobile terminal but is less than all of the inputs available on a mobile terminal.

Examples of inputs that may correspond to an "unlock" sequence (e.g. where the key guard is turned off) may be a touch and drag event across a region of a touch-screen, a sequence of two or more keys on a keypad or virtual keypad, a press-and-hold of a key or virtual key for a predetermined amount of time, or a particular motion of the mobile terminal as sensed through motion sensors among others. Similar inputs may be used for the "wake-up" sequence; however it may be desirable for the "wake-up" input sequence to be sufficiently different from the "unlock" sequence such that the two are not confused.

An example embodiment of the present invention is described herein with reference to the flowchart of FIG. 3. The mobile terminal may be in a key guard on, locked mode with a first level of functionality at 300. The first level of functionality may include only the ability to receive input corresponding to the unlock sequence or, according to an example embodiment of the present invention, an input corresponding to a wake-up sequence. A user may execute an input function received by the mobile terminal at 305. For example, the input function may be received by the keypad 50, sensors 47, or other user interface and provided to the processor 40. The mobile terminal, such as the processor, may then determine if the input corresponds to the unlock sequence required to unlock the key guard at 310. If the input corresponds to the unlock sequence, such as a predefined unlock sequence stored by non-volatile memory 62, the mobile terminal is unlocked and the processor may restore a second level of functionality, which is substantially full functionality at 315. If the input does not correspond to the unlock sequence, the mobile terminal, such as the processor, may determine if the input corresponds to the wake-up sequence, such as a predefined wake-up sequence stored by non-volatile memory 62, at 320. If the input does not correspond to the wake-up sequence, the processor maintains the mobile terminal in the locked mode with the key guard remaining on at 325. If the input at 320 does correspond to the wake-up sequence, the mobile terminal is woken up and the processor may provide or otherwise enable the wake-up, partial functionality, a third level of functionality at 335.

Once woken up, the mobile terminal of one embodiment may remain in the wake-up mode with the third level of functionality indefinitely until an indication of depression of a key for a predetermined period of time is received. The mobile terminal may also or alternatively include a wake-up timer that may be initiated by the processor at 330 upon the mobile terminal being woken up. The wake-up timer of this embodiment may determine how long the wake-up functionality will last. This timer may be user-adjustable and may help to prevent unintended input. In this embodiment, the processor may monitor the wake-up timer and return the terminal to a locked, key guard on, first level of functionality after the expiration of the wake-up functionality timer (e.g., 10 seconds). In some examples, the processor may provide the third level of functionality only until a certain function, such as the first function, has been executed in the wake-up functionality mode, with the processor then returning the mobile terminal to a first level of functionality. Still further, the processor may transition from the third level of functionality to the first level of functionality in an instance in which the "unlock" sequence of input is detected at 340.

As noted above, there are at least three levels of functionality for the inputs of a mobile terminal according to example embodiments of the present invention: A first functionality in the key guard locked mode wherein the only input available is a "wake-up" input or an "unlock" input; A second level of functionality which is achieved after receiving the "unlock" input from the locked mode, wherein substantially full functionality of the mobile terminal is enabled; And a third level of functionality which is achieved after receiving the "wake-up" input from the locked mode, wherein partial functionality is enabled on the mobile terminal.

The third level of functionality may be user-defined such that particular functions are available to a user without fully unlocking the phone and restoring full functionality. Such partial functionality may include, for example, an input corresponding to "play" or "pause" in a music player application, or a message query function among others.

The third level of functionality may also include functions that are not available or not used in the second level of functionality where the mobile terminal has substantially full functionality. Such functions may include functions that are duplicative in nature to some functions available in the second level of functionality. An example embodiment of such functionality may include a message-box function that enables a user to determine if they have unread messages (e.g., text, voice, email, etc.) and if so, how many. In the second level of functionality the user may view an icon on a display that indicates the number of messages and/or the number of unread messages. In the third level of functionality, the user may, for example be able to shake the mobile terminal and the terminal may respond with an audible and/or tactile indication of the number of messages and/or the number of unread messages. An example of an audible indication may include a voice telling the user how many messages there are. Another example of an audible indication may include the sound of a number of ball bearings bouncing around as if inside the mobile terminal and responding to the shaking motion, wherein the number of ball bearings corresponds to the number of messages. An example of a tactile indication may include a vibratory response of pulses indicating the number of messages or the feel of the ball bearings bouncing around in addition to the sound of said bearings above. Any number of audible and/or tactile indications may be used for such functionality. Further, any combination of inputs may be used to elicit the functions available in the third level of functionality. Example inputs may include the depression of a key for a predetermined amount of time, an extended touch of a particular area of a touch screen, a shaking of the mobile terminal, or a simultaneous depression of buttons on opposite sides of a mobile terminal among many other possible inputs or combinations of inputs.

Example embodiments of the present invention may enable features of a mobile terminal to be used while in environments that are not conducive to using the full functionality of a mobile terminal. Such environments may include theaters, meetings, or meals where it may be viewed as impolite to view and use a mobile terminal. In such environments, the third level of functionality may include functions that enable a user to ascertain information or otherwise access a mobile terminal discretely. In the third level of functionality, a user may be able to depress a button or use another available input to elicit a response from the mobile terminal indicative of the information or function a user is trying to achieve. Such functions may include a vibration for number of unread messages, changing the notification functions of a mobile terminal to be in a "silent" or "vibrate" mode, or a tactile indication of the time (e.g., two series of vibrations, one for hours and one for minutes). In the third level of functionality, a user is able to provide a prepared response to incoming voice calls, text messages, or emails. Such a function includes operating an input corresponding to a reply message of either a text message or email with prepared text such as "In a meeting until 4:00pm. Will respond afterwards."

Another example embodiment of the present invention may include activation of the third level of functionality by pressing and holding an input, such as a sensor or key on a keypad. The third level of functionality may only be available while the input is being depressed. Once the sensor or key is released, the mobile terminal may return to the locked, first level of functionality.

The third level of functionality may also be enabled in example embodiments of the present invention while the mobile terminal is executing software or an application that does not require full functionality that is available when operating with the second level of functionality. Such software or applications that may use the third level of functionality may include a mobile terminal executing a music player application. In a music player application, limited functionality may be desirable such that motion, such as when the device is in a pocket of a user that is running or cycling, does not cause unintended input to the mobile terminal. In such example embodiments, the third level of functionality may include inputs such as specific motions of the mobile terminal that would be unlikely to be replicated unintentionally (e.g., a spinning motion of the mobile terminal). The third level of functionality in such embodiments may also include some, but not all inputs or sensors of the mobile terminal that effect operations associated with the application. For example, a spinning motion of the mobile terminal while operating with the third level of functionality while executing a music player application may select a random song from a database of songs. Further, the depression of an easily accessed button or key may mute or pause the music player application.

As described above and as will be appreciated by one skilled in the art, embodiments of the present invention may be configured as a system, method or electronic device. Accordingly, embodiments of the present invention may be comprised of various means including entirely of hardware or any combination of software and hardware. Furthermore, embodiments of the present invention may take the form of a computer program product on a computer-readable storage medium having computer-readable program instructions (e.g., computer software) embodied in the storage medium. Any suitable computer-readable storage medium may be utilized including hard disks, CD-ROMs, optical storage devices, or magnetic storage devices.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method comprising:
providing for operation of a mobile communication device (10) in accordance with a first level of functionality having a first number of inputs that are operable, the first level of functionality being a locked mode of the mobile communication device;
providing for operation in accordance with a second level of functionality having a second number of inputs that are operable, the second level of functionality being an unlocked mode of the mobile communication device;
providing for operation in accordance with a third level of functionality having a third number of inputs that are operable, the third level of functionality providing partial functionality of the mobile communication device wherein the mobile communication device is partly unlocked, wherein the third number of inputs is greater than the first number of inputs and is less than the second number of inputs;
receiving an input while operating in accordance with the first level of functionality;
if the input is of a first type, causing operations to change from being conducted in accordance with the first level of functionality to being conducted in accordance with the third level of functionality, said third level of functionality including at least one function that allows a user to respond to an incoming voice call, text message or email by providing a prepared response, wherein the prepared response comprises a text message or email with prepared text; and
if the input is of a second type that is different to the first type, causing operations to change from being conducted in accordance with the first level of functionality to being conducted in accordance with the second level of functionality,
**characterized in that** the method further comprises returning to operate in accordance with the first level of functionality in response to:
a predetermined amount of time passing since the input of the first or second type was received, or
receiving an indication of depression of a key for a predetermined period of time.

2. A method according to claim 1 wherein the function includes operating an input corresponding to a reply message of either a text message or email.

3. A method according to any preceding claim wherein the first type of input and the second type of input are any of, a touch and drag event across a region of a touch screen, a sequence of two or more keys on a keypad or virtual keypad, a press and hold of a key or virtual key for a predetermined amount of time or a particular motion of the mobile terminal as sensed through motion sensors, wherein the first type of input and the second type of input are different.

4. A method according to any preceding claim wherein the third level of functionality comprises enabling some of the available inputs or sensors (47).

5. A method according to claim 4 wherein the sensor detects any of; a stimulus on a button, a depression of a button, a touch on a touch sensitive display or a motion sensor for detecting motion.

6. A mobile communication device (10) comprising at least one processor (40) and at least one memory (60, 62) including computer program code configured to, with the at least one processor, cause the mobile communication device to:
provide for operation of a mobile communication device (10) in accordance with a first level of functionality having a first number of inputs that are operable, the first level of functionality being a locked mode of the mobile communication device;
provide for operation in accordance with a second level of functionality having a second number of inputs that are operable, the second level of functionality being an unlocked mode of the mobile communication device;
provide for operation in accordance with a third level of functionality having a third number of inputs that are operable, the third level of functionality providing partial functionality of the mobile communication device wherein the mobile communication device is partly unlocked, wherein the third number of inputs is greater than the first number of inputs and is less than the second number of inputs;
receive an input while operating in accordance with the first level of functionality;
if the input is of a first type, cause operations to change from being conducted in accordance with the first level of functionality to being conducted in accordance with the third level of functionality, said third level of functionality including at least one function that allows a user to respond to an incoming voice call, text message or email by providing a prepared response, wherein the prepared response comprises a text message or email with prepared text; and
if the input is of a second type that is different to the first type, cause operations to change from being conducted in accordance with the first level of functionality to being conducted in accordance with the second level of functionality,
**characterized in that** the mobile communication device is further configured to return to operate in accordance with the first level of functionality in response to:
a predetermined amount of time passing since the input of the first or second type was received, or
receiving an indication of depression of a key for a predetermined period of time.

7. A mobile communication device according to claim 6 wherein the function includes operating an input corresponding to a reply message of either a text message or email.

8. A mobile communication device according to any of claims 6 or 7 wherein the first type of input and the second type of input are any of, a touch and drag event across a region of a touch screen, a sequence of two or more keys on a keypad or virtual keypad, a press and hold of a key or virtual key for a predetermined amount of time or a particular motion of the mobile communication device as sensed through motion sensors wherein the first type of input and the second type of input are different.

9. A mobile communication device according to any of claims 6 to 8 wherein the third level of functionality comprises enabling some of the available inputs or sensors (47).

10. A mobile communication device according to claim 9 wherein the sensor detects any of: a stimulus on a button, a depression of a button, a touch on a touch sensitive display or a motion sensor for detecting motion.

11. Computer-executable program code instructions which, when executed by a computer, cause the computer to perform the method of any of claims 1 to 5.

## Patentansprüche

1. Verfahren, umfassend:
Bereitstellen eines Betriebs einer mobilen Kommunikationsvorrichtung (10) gemäß einer ersten Funktionalitätsebene mit einer ersten Anzahl von Eingaben, die betreibbar sind, wobei die erste Funktionalitätsebene ein gesperrter Modus der mobilen Kommunikationsvorrichtung ist;
Bereitstellen eines Betriebs gemäß einer zweiten Funktionalitätsebene mit einer zweiten Anzahl von Eingaben, die betreibbar sind, wobei die zweite Funktionalitätsebene ein entsperrter Modus der mobilen Kommunikationsvorrichtung ist;
Bereitstellen eines Betriebs gemäß einer dritten Funktionalitätsebene mit einer dritten Anzahl von Eingaben, die betreibbar sind, wobei die dritte Funktionalitätsebene eine Teilfunktionalität der mobilen Kommunikationsvorrichtung bereitstellt, wobei die mobile Kommunikationsvorrichtung teilweise entsperrt ist, wobei die dritte Anzahl von Eingaben größer als die erste Anzahl von Eingaben ist und kleiner als die zweite Anzahl von Eingaben ist;
Empfangen einer Eingabe während des Betriebs gemäß der ersten Funktionalitätsebene;
wenn die Eingabe von einem ersten Typ ist, Veranlassen, dass eine Durchführung von Operationen gemäß der ersten Funktionalitätsebene in eine Durchführung gemäß der dritten Funktionalitätsebene geändert wird, wobei die dritte Funktionalitätsebene mindestens eine Funktion beinhaltet, die es einem Benutzer ermöglicht, auf einen eingehenden Sprachanruf, eine Textnachricht oder eine E-Mail durch Bereitstellen einer vorbereiteten Antwort zu antworten, wobei die vorbereitete Antwort eine Textnachricht oder E-Mail mit vorbereitetem Text umfasst; und
wenn die Eingabe von einem zweiten Typ ist, der sich von dem ersten Typ unterscheidet, Veranlassen, dass die Durchführung von Operationen gemäß der ersten Funktionalitätsebene in eine Durchführung gemäß der zweiten Funktionalitätsebene geändert wird,
**dadurch gekennzeichnet, dass**
das Verfahren ferner das Zurückkehren zum Betrieb gemäß der ersten Funktionalitätsebene in Reaktion auf Folgendes zurückkehrt:
Verstreichen einer vorbestimmten Zeitdauer, seit die Eingabe des ersten oder zweiten Typs empfangen wurde, oder
Empfangen einer Anzeige eines Drucks auf eine Taste für eine vorbestimmte Zeitdauer.

2. Verfahren nach Anspruch 1, wobei die Funktion das Tätigen einer Eingabe umfasst, die einer Antwortnachricht auf entweder eine Textnachricht oder eine E-Mail entspricht.

3. Verfahren nach einem der vorhergehenden Ansprüche, wobei der erste Eingabetyp und der zweite Eingabetyp ein beliebiges von einem Berührungs- und Ziehereignis über einen Bereich eines Berührungsbildschirms, einer Kombination von zwei oder mehr Tasten auf einer Tastatur oder einer virtuellen Tastatur, eines Drückens und Haltens einer Taste oder einer virtuellen Taste für eine vorbestimmte Zeitdauer oder einer bestimmte Bewegung des mobilen Endgeräts, wie durch Bewegungssensoren erfasst, sind, wobei der erste Eingabetyp und der zweite Eingabetyp unterschiedlich sind.

4. Verfahren nach einem der vorhergehenden Ansprüche, wobei die dritte Funktionalitätsebene das Aktivieren einiger der verfügbaren Eingaben oder Sensoren (47) umfasst.

5. Verfahren nach Anspruch 4, wobei der Sensor eines der Folgenden erkennt: einen Impuls auf einer Taste, ein Drücken einer Taste, eine Berührung eines berührungsempfindlichen Displays oder einen Bewegungssensor zur Bewegungserkennung.

6. Mobile Kommunikationsvorrichtung (10), umfassend mindestens einen Prozessor (40) und mindestens einen Speicher (60, 62) mit einem Computerprogrammcode, der konfiguriert ist, um mit dem mindestens einen Prozessor die mobilen Kommunikationsvorrichtung zu veranlassen:
einen Betrieb einer mobilen Kommunikationsvorrichtung (10) gemäß einer ersten Funktionalitätsebene mit einer ersten Anzahl von Eingaben, die betreibbar sind, bereitzustellen, wobei die erste Funktionalitätsebene ein gesperrter Modus der mobilen Kommunikationsvorrichtung ist;
einen Betrieb gemäß einer zweiten Funktionalitätsebene mit einer zweiten Anzahl von Eingaben, die betreibbar sind, bereitzustellen, wobei die zweite Funktionalitätsebene ein entsperrter Modus der mobilen Kommunikationsvorrichtung ist;
einen Betrieb gemäß einer dritten Funktionalitätsebene mit einer dritten Anzahl von Eingaben, die betreibbar sind, bereitzustellen, wobei die dritte Funktionalitätsebene eine Teilfunktionalität der mobilen Kommunikationsvorrichtung bereitstellt, wobei die mobile Kommunikationsvorrichtung teilweise entsperrt ist, wobei die dritte Anzahl von Eingaben größer als die erste Anzahl von Eingaben ist und kleiner als die zweite Anzahl von Eingaben ist;
eine Eingabe während des Betriebs gemäß der ersten Funktionalitätsebene zu empfangen;
wenn die Eingabe von einem ersten Typ ist, zu veranlassen, dass eine Durchführung von Operationen gemäß der ersten Funktionalitätsebene in eine Durchführung gemäß der dritten Funktionalitätsebene geändert wird, wobei die dritte Funktionalitätsebene mindestens eine Funktion beinhaltet, die es einem Benutzer ermöglicht, auf einen eingehenden Sprachanruf, eine Textnachricht oder eine E-Mail durch Bereitstellen einer vorbereiteten Antwort zu antworten, wobei die vorbereitete Antwort eine Textnachricht oder E-Mail mit vorbereitetem Text umfasst; und
wenn die Eingabe von einem zweiten Typ ist, der sich von dem ersten Typ unterscheidet, zu veranlassen, dass die Durchführung von Operationen gemäß der ersten Funktionalitätsebene in eine Durchführung gemäß der zweiten Funktionalitätsebene geändert wird,
**dadurch gekennzeichnet, dass**
die mobile Kommunikationsvorrichtung ferner konfiguriert ist, um zum Betrieb gemäß der ersten Funktionalitätsebene in Reaktion auf Folgendes zurückzukehren:
Verstreichen einer vorbestimmten Zeitdauer, seit die Eingabe des ersten oder zweiten Typs empfangen wurde, oder
Empfangen einer Anzeige eines Drucks auf eine Taste für eine vorbestimmte Zeitdauer.

7. Mobile Kommunikationsvorrichtung nach Anspruch 6, wobei die Funktion das Tätigen einer Eingabe umfasst, die einer Antwortnachricht auf entweder eine Textnachricht oder eine E-Mail entspricht.

8. Mobile Kommunikationsvorrichtung nach einem der Ansprüche 6 oder 7, wobei der erste Eingabetyp und der zweite Eingabetyp ein beliebiges von einem Berührungs- und Ziehereignis über einen Bereich eines Berührungsbildschirms, einer Kombination von zwei oder mehr Tasten auf einer Tastatur oder einer virtuellen Tastatur, eines Drückens und Haltens einer Taste oder einer virtuellen Taste für eine vorbestimmte Zeitdauer oder einer bestimmte Bewegung der mobilen Kommunikationsvorrichtung, wie durch Bewegungssensoren erfasst, sind, wobei der erste Eingabetyp und der zweite Eingabetyp unterschiedlich sind.

9. Mobile Kommunikationsvorrichtung nach einem der Ansprüche 6 bis 8, wobei die dritte Funktionalitätsebene das Aktivieren einiger der verfügbaren Eingaben oder Sensoren (47) umfasst.

10. Mobile Kommunikationsvorrichtung nach Anspruch 9, wobei der Sensor eines der Folgenden erkennt: einen Impuls auf einer Taste, ein Drücken einer Taste, eine Berührung eines berührungsempfindlichen Displays oder einen Bewegungssensor zur Bewegungserkennung.

11. Computerausführbare Programmcodeanweisungen, die bei Ausführung durch einen Computer den Computer dazu veranlassen, das Verfahren nach einem der Ansprüche 1 bis 5 durchzuführen.

## Revendications

1. Procédé, comprenant :
la possibilité offerte d'un fonctionnement d'un dispositif de communication mobile (10) conformément à un premier niveau de fonctionnalité comportant un premier nombre d'entrées qui sont utilisables, le premier niveau de fonctionnalité étant un mode verrouillé du dispositif de communication mobile ;
la possibilité offerte d'un fonctionnement conformément à un deuxième niveau de fonctionnalité comportant un deuxième nombre d'entrées qui sont utilisables, le deuxième niveau de fonctionnalité étant un mode déverrouillé du dispositif de communication mobile ;
la possibilité offerte d'un fonctionnement conformément à un troisième niveau de fonctionnalité comportant un troisième nombre d'entrées qui sont utilisables, le troisième niveau de fonctionnalité offrant une fonctionnalité partielle du dispositif de communication mobile où le dispositif de communication mobile est partiellement déverrouillé, le troisième nombre d'entrées étant supérieur au premier nombre d'entrées et inférieur au deuxième nombre d'entrées ;
la réception d'une entrée lors d'un fonctionnement selon le premier niveau de fonctionnalité ;
si l'entrée est d'un premier type, la commande du changement de la conduite d'opérations conformément au premier niveau de fonctionnalité pour leur conduite conformément au troisième niveau de fonctionnalité, ledit troisième niveau de fonctionnalité comportant au moins une fonction permettant à un utilisateur de répondre à un appel vocal, message-texte ou courriel entrant en fournissant une réponse préparée, la réponse préparée comprenant un message-texte ou courriel comportant du texte préparé ; et
si l'entrée est d'un deuxième type, différent du premier type, la commande du changement de la conduite d'opérations conformément au premier niveau de fonctionnalité pour leur conduite conformément au deuxième niveau de fonctionnalité,
le procédé étant **caractérisé en ce qu'**il comprend en outre le retour à un fonctionnement conformément au premier niveau de fonctionnalité en réponse à :
l'écoulement d'un laps de temps prédéterminé depuis la réception de l'entrée du premier ou du deuxième type,
la réception d'une indication d'enfoncement d'une touche pendant une période de temps prédéterminée.

2. Procédé selon la revendication 1, dans lequel la fonction comporte l'utilisation d'une entrée correspondant à un message de réponse soit d'un message-texte, soit d'un courriel.

3. Procédé selon l'une quelconque des revendications précédentes, dans lequel le premier type d'entrée et le deuxième type d'entrée sont un type quelconque parmi : un événement de toucher et de glisser en travers d'une région d'un écran tactile, une séquence d'au moins deux touches sur un pavé de touches ou un pavé de touches virtuel, le maintien d'une touche ou d'une touche virtuelle enfoncée pendant un laps de temps prédéterminé ou un mouvement particulier du terminal mobile tel que détecté au moyen de capteurs de mouvement, le premier type d'entrée et le deuxième type d'entrée étant différents.

4. Procédé selon l'une quelconque des revendications précédentes, dans lequel le troisième niveau de fonctionnalité comprend l'activation de certaines des entrées disponibles ou certains des capteurs (47) disponibles.

5. Procédé selon la revendication 4, dans lequel le capteur détecte un élément quelconque dans le groupe constitué par : un stimulus sur un bouton, un enfoncement d'un bouton, un toucher sur un affichage sensible au toucher ou un capteur de mouvement destiné à détecter un mouvement.

6. Dispositif de communication mobile (10) comprenant au moins un processeur (40) et au moins une mémoire (60, 62) comportant un code de programme d'ordinateur configuré pour, conjointement avec l'au moins un processeur, amener le dispositif de communication mobile à :
offrir la possibilité d'un fonctionnement d'un dispositif de communication mobile (10) conformément à un premier niveau de fonctionnalité comportant un premier nombre d'entrées qui sont utilisables, le premier niveau de fonctionnalité étant un mode verrouillé du dispositif de communication mobile ;
offrir la possibilité d'un fonctionnement conformément à un deuxième niveau de fonctionnalité comportant un deuxième nombre d'entrées qui sont utilisables, le deuxième niveau de fonctionnalité étant un mode déverrouillé du dispositif de communication mobile ;
offrir la possibilité d'un fonctionnement conformément à un troisième niveau de fonctionnalité comportant un troisième nombre d'entrées qui sont utilisables, le troisième niveau de fonctionnalité offrant une fonctionnalité partielle du dispositif de communication mobile où le dispositif de communication mobile est partiellement déverrouillé, le troisième nombre d'entrées étant supérieur au premier nombre d'entrées et inférieur au deuxième nombre d'entrées ;
recevoir une entrée lors d'un fonctionnement selon le premier niveau de fonctionnalité ;
si l'entrée est d'un premier type, commander le changement de la conduite d'opérations conformément au premier niveau de fonctionnalité pour leur conduite conformément au troisième niveau de fonctionnalité, ledit troisième niveau de fonctionnalité comportant au moins une fonction permettant à un utilisateur de répondre à un appel vocal, message-texte ou courriel entrant en fournissant une réponse préparée, la réponse préparée comprenant un message-texte ou courriel comportant du texte préparé ; et
si l'entrée est d'un deuxième type, différent du premier type, commander le changement de la conduite d'opérations conformément au premier niveau de fonctionnalité pour leur conduite conformément au deuxième niveau de fonctionnalité,
le dispositif de communication mobile étant **caractérisé en ce qu'**il est configuré en outre retourner à un fonctionnement conformément au premier niveau de fonctionnalité en réponse à :
l'écoulement d'un laps de temps prédéterminé depuis la réception de l'entrée du premier ou du deuxième type,
la réception d'une indication d'enfoncement d'une touche pendant une période de temps prédéterminée.

7. Dispositif de communication mobile selon la revendication 6, dans lequel la fonction comporte l'utilisation d'une entrée correspondant à un message de réponse soit d'un message-texte, soit d'un courriel.

8. Dispositif de communication mobile selon l'une quelconque des revendications 6 ou 7, dans lequel le premier type d'entrée et le deuxième type d'entrée sont un type quelconque parmi : un événement de toucher et de glisser en travers d'une région d'un écran tactile, une séquence d'au moins deux touches sur un pavé de touches ou un pavé de touches virtuel, le maintien d'une touche ou d'une touche virtuelle enfoncée pendant un laps de temps prédéterminé ou un mouvement particulier du dispositif de communication mobile tel que détecté au moyen de capteurs de mouvement, le premier type d'entrée et le deuxième type d'entrée étant différents.

9. Dispositif de communication mobile selon l'une quelconque des revendications 6 à 8, dans lequel le troisième niveau de fonctionnalité comprend l'activation de certaines des entrées disponibles ou certains des capteurs (47) disponibles.

10. Dispositif de communication mobile selon la revendication 9, dans lequel le capteur détecte un élément quelconque dans le groupe constitué par : un stimulus sur un bouton, un enfoncement d'un bouton, un toucher sur un affichage sensible au toucher ou un capteur de mouvement destiné à détecter un mouvement.

11. Instructions de code de programme exécutables par ordinateur dont l'exécution, par un ordinateur, amène l'ordinateur à mettre en oeuvre le procédé selon l'une quelconque des revendications 1 à 5.
